# EUROPEAN PATENT SPECIFICATION

(11) **EP 4 353 365 B1**
(45) Date of publication and mention of the grant of the patent: **15.10.2025**
(21) Application number: 23781295.3
(22) Date of filing: 28.03.2023
(51) Int. Cl.: B05C 5/02, B05C 11/10, H01M 4/04, B05C 9/06

(54) **DIE COATER FOR COATING ACTIVE MATERIAL OF SECONDARY BATTERY CURRENT COLLECTOR**
DÜSENBESCHICHTER ZUR BESCHICHTUNG VON AKTIVMATERIAL EINES SEKUNDÄRBATTERIESTROMKOLLEKTORS
DISPOSITIF DE REVÊTEMENT DE MATRICE POUR LE REVÊTEMENT D'UN MATÉRIAU ACTIF D'UN COLLECTEUR DE COURANT DE BATTERIE SECONDAIRE

(30) Priority: 30.03.2022 KR 20220039308
(43) Date of publication of application: 17.04.2024
(73) Proprietor: LG Energy Solution, Ltd., Seoul 07335 (KR)
(72) Inventor: PARK, Joon Sun, Daejeon 34122 (KR); KIM, Guk Tae, Daejeon 34122 (KR); LEE, Taek Soo, Daejeon 34122 (KR); KIM, Man Hyeong, Daejeon 34122 (KR); CHOI, Min Hyuck, Daejeon 34122 (KR)
(74) Representative: Plasseraud IP
(86) International application number: PCT/KR2023/004088
(87) International publication number: WO 2023/191440

(56) References cited:
- JP-A- 2005 137 974
- JP-A- 2019 107 606
- KR-A- 20170 126 463
- KR-A- 20210 029 579
- KR-A- 20210 155 879
- KR-B1- 100 921 583
- KR-B1- 100 921 583
- KR-B1- 102 035 826
- KR-B1- 102 035 826

## Description

### [Cross-Reference to Related Applications]

The present application is a national phase entry of International Application PCT/KR2023/004088 filed on March 28, 2023 which claims the benefit of priority based on Korean Patent Application No. 10-2022-0039308, filed on March 30, 2022.

### [Technical Field]

The present invention relates to a die coater capable of effectively and simultaneously coating two different types of liquids on a current collector for a secondary battery.

### [Background Art]

With the increase in technology development and demand for mobile devices, the demand for secondary batteries is also rapidly increasing. Among them, lithium secondary batteries are widely used as an energy source for various electronic products as well as various mobile devices because of their high energy density and high operating voltage and excellent storage and lifespan characteristics.

Lithium secondary batteries use an electrode with an active material layer and an insulating layer formed on a surface of a current collector. The electrode is manufactured by applying and drying both an electrode slurry including an active material and the like and an insulating liquid including an insulating material and the like on the surface of the current collector so as to partially overlap each other at an edge of an electrode mixture layer, using a coating device such as a die coater.

Applying the electrode slurry and the insulating liquid separately in separate processes is undesirable in terms of production efficiency, and thus, in order to address this problem, a technique for simultaneously discharging the electrode slurry and the insulating liquid from a single die coater is being developed. For example, the technique of Korean Patent Registration No. 10-2035826 introduces a multi-row simultaneous coating slot die.

Such a conventional technique has a configuration of forming an independent slit for discharging an electrode slurry and an insulating liquid on a single shim for a die coater, and there is a risk that any one liquid inside the die coater leaks and the electrode slurry and the insulating liquid are mixed, or that the two liquids are mixed and discharged from an outlet of a slit, causing defects in the quality of the current collector.

KR 100 921 583 B1 discloses a method of forming an extrudate by applying a coating agent on a substrate.

KR 2021 0155879 A discloses a slot die and an electrode slurry coating apparatus.

JP 2019 107606 A discloses a coating device for forming a coating film.

### [Disclosure]

### [Technical Problem]

The present invention is directed to providing a die coater capable of effectively and simultaneously coating two different types of liquids on a current collector for a secondary battery.

The technical problem to be solved by the present invention is not limited to the above-described problem, and other problems not mentioned can be clearly understood by a person skilled in the art from the description of the invention described below.

The invention is as defined by the appended claims.

### [Technical Solution]

The present invention relates to a die coater capable of effectively and simultaneously coating two different types of liquids on a current collector for a secondary battery, and the die coater includes a lower block including a manifold configured to accommodate an electrode slurry, an upper block coupled to the lower block and including an insulating liquid inlet, and a coater shim interposed between the upper block and the lower block, wherein the coater shim includes a first coater shim in which a first slit for discharging the electrode slurry accommodated in the manifold is formed and a second coater shim in which a second slit for discharging an insulating liquid supplied through the insulating liquid inlet is formed, and the second coater shim is pressed by a fixing bolt screw-coupled to the insulating liquid inlet.

A width of the first slit may be limited by a width of the second coater shim.

In addition, a height of the first slit may correspond to a height of the first coater shim, and a height of the second slit may be less than a height of the second coater shim.

In one embodiment of the present invention, a hollow part passing through the fixing bolt in a longitudinal direction may be formed, and the insulating liquid may be supplied to the second slit through the hollow part.

In an example, the second slit may be formed in the form of a groove in the second coater shim, and may face the lower block.

In addition, an insulating liquid supply hole passing through the second coater shim may be formed on the second slit, and the fixing bolt may press the second coater shim at a position at which the hollow part is aligned with the insulating liquid supply hole.

In a specific example, the second coater shim may include a concave flow path groove open toward the lower block and having a bottom surface, the insulating liquid supply hole may be disposed in a closed end of the flow path groove, and an open end of the flow path groove may form the second slit.

In addition, the first coater shim may include a base extending along a width direction, and first and second guides protruding and extending from both ends of the base, respectively, and one side walls of the paired second coater shims may be in close contact with inner sidewalls of the first and second guides, respectively.

Accordingly, a distance between the other side walls of the paired second coater shims may correspond to a width of the first slit.

In addition, the fixing bolt may include a head part coupled to a fastening mechanism, a support part connected to the head part and having an outer diameter corresponding to a diameter of the insulating liquid inlet, a male screw part screw-coupled to a female screw part formed on the insulating liquid inlet and having a thread diameter corresponding to the outer diameter of the support part, and a pressing part having an outer diameter corresponding to a minor diameter of the female screw part formed on the insulating liquid inlet.

In addition, the second slit of the second coater shim may be firmly pressure-sealed to the lower block by a fastening force of the male screw part to the female screw part formed on the insulating liquid inlet to prevent mixing between the electrode slurry and the insulating liquid.

Meanwhile, according to another embodiment of the present invention, the die coater may further include a third coater shim including a concave U-shaped flow path groove that is open toward the lower block and has a bottom surface, wherein the insulating liquid supply hole may be disposed in a closed end of the U-shaped flow path groove. Two open ends of the U-shaped flow path groove may form third slits, a height of the third coater shim may be equal to a height of each of the first and second coater shims, and the third coater shim may be spaced apart from the first and second coater shims and disposed between the first and second guides. In addition, the fixing bolt may press the third coater shim at a position at which the hollow part is aligned with the insulating liquid supply hole of the third coater shim.

Accordingly, in another embodiment of the present invention, the first slit formed by the paired second coater shims may be divided into two parts by the third coater shim.

### [Advantageous Effects]

A die coater of the present invention having the above configuration is configured to simultaneously discharge two different types of liquids, for example, an electrode slurry and an insulating liquid, and in particular, a first slit and a second slit for discharging the electrode slurry and the insulating liquid, respectively, are physically separated from each other in the die coater.

In addition, a second coater shim forming the second slit is sealed by a separate pressing structure, so that internal mixing of the electrode slurry and the insulating liquid can be reliably prevented.

Further, by forming a hollow part passing through a fixing bolt that presses and seals the second coater shim, and supplying the insulating liquid directly to the second coater shim through the hollow part of the fixing bolt, it can minimize the likelihood that a portion at which the insulating liquid supplied from the outside and discharged through the second slit of the second coater shim is likely to leak out of a flow path.

Accordingly, the die coater of the present invention makes it possible to effectively coat two different types of liquids simultaneously on a current collector.

However, the technical effects that can be obtained through the present invention is not limited to the above-described effects, and other effects not mentioned can be clearly understood by a person skilled in the art from the description of the invention described below.

### [Brief Description of the Drawings]

Because the following drawings attached to the present specification illustrate exemplary embodiments of the present invention and serve to facilitate understanding of the technical idea of the present invention together with the detailed description of the invention described below, the present invention should not be limitedly interpreted on the basis of the drawings.
FIG. 1 is an exploded perspective view illustrating a die coater according to one embodiment of the present invention.
FIG. 2 is a plan view of the die coater as seen through an upper block.
FIG. 3 is an enlarged front view of portion "A" of FIG. 2.
FIG. 4 is a view illustrating a coupling structure of a second coater shim and a fixing bolt.
FIG. 5 is an exploded perspective view illustrating a die coater according to another embodiment of the present invention.
FIG. 6 is a view illustrating a coupling structure of a third coater shim and a fixing bolt.

### [Summary]

The present invention may have various modifications and various embodiments, and thus specific embodiments thereof will be described in detail below.

The terms "comprise," "include" and "have" used herein designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, film, region or plate is disposed "on" another part, this includes not only a case in which one part is disposed "directly on" another part, but a case in which still another part is interposed therebetween. In contrast, when a part of a layer, film, region or plate is disposed "under" another part, this includes not only a case in which one part is disposed "directly under" another part, but a case in which still another part is interposed therebetween. In addition, in this application, "on" may include not only a case of being disposed on an upper part but also a case of being disposed on a lower part.

The present invention relates to a die coater capable of effectively and simultaneously coating two different types of liquids on a current collector for a secondary battery.

In an example, the die coater of the present invention includes a lower block having a manifold configured to accommodate an electrode slurry, an upper block coupled to the lower block and having an insulating liquid inlet, and a coater shim interposed between the upper block and the lower block.

Here, the die coater of the present invention includes two types of coater shims: a first coater shim; and a second coater shim. The first coater shim forms a first slit for discharging the electrode slurry accommodated in the manifold of the lower block, and the second coater shim forms a second slit for discharging an insulating liquid supplied through the insulating liquid inlet of the upper block. In particular, the second coater shim, which forms the second slit for discharging the insulating liquid, is pressed by a fixing bolt screw-coupled to the insulating liquid inlet.

According to the die coater of the present invention, two different types of liquids, for example, the electrode slurry and the insulating liquid, are simultaneously discharged, and in particular, a first slit and a second slit, which discharge the electrode slurry and the insulating liquid, respectively, are physically separated from each other in the die coater, and the second coater shim forming the second slit maintains airtightness by a separate pressing structure, thereby reliably preventing the internal mixing of the electrode slurry and the insulating liquid.

### [Detailed Description]

Hereinafter, specific embodiments of a die coater according to the present invention will be described in detail with reference to the accompanying drawings.

### [First embodiment]

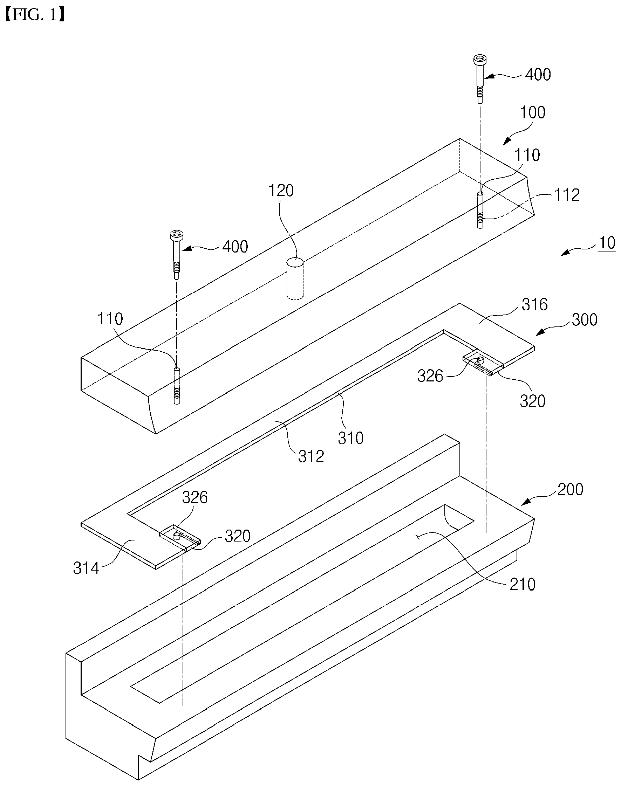

FIG. 1 is an exploded perspective view illustrating a die coater 10 according to one embodiment of the present invention. The overall configuration of the die coater 10 according to the present invention will be described with reference to FIG. 1.

As described above, the present invention relates to the die coater 10 capable of effectively and simultaneously coating two different types of liquids on a current collector for a secondary battery. The two different types of liquids may be, for example, an electrode slurry and an insulating liquid.

The die coater 10 of the present invention includes an upper block 100, a lower block 200, and a coater shim interposed between the upper block 100 and the lower block 200. In particular, in the present invention, the coater shim includes a first coater shim 310 and a second coater shim 320.

The upper block 100 includes an insulating liquid inlet 110 and is a portion occupying approximately half of the body of the die coater 10. The lower block 200 is a portion occupying the other half of the body and coupled to the upper block 100, and includes a manifold 210 configured to accommodate the electrode slurry. Here, the upper and lower portions are divided based on upper and lower portions of the drawing, and are not intended to limit an actual installation direction of the die coater 10.

For reference, FIG. 1 illustrates that an electrode slurry inlet 120 communicating with the manifold 210 of the lower block 200 is formed in the upper block 100, but the electrode slurry inlet 120 may be formed in the lower block 200.

The coater shim is interposed between the upper block 100 and the lower block 200, and is interposed between the upper block 100 and the lower block 200 to form a slit having a height suitable for discharging a liquid. In addition, the coater shim serves to limit a flow direction of a liquid introduced into the die coater 10 or accommodated in the die coater 10 so that the liquid is discharged toward the slit without backflow, and also serves to seal so that the liquid does not leak to other portions other than the slit.

The present invention includes the first coater shim 310 and the second coater shim 320 as coater shims, and the first coater shim 310 and the second coater shim 320 respectively form a first slit 318 and a second slit 328 separated from each other. Specifically, the first coater shim 310 forms the first slit 318 for discharging the electrode slurry accommodated in the manifold 210 of the lower block 200, and the second coater shim 320 forms the second slit 328 for discharging the insulating liquid supplied through the insulating liquid inlet 110 of the upper block 100.

In addition, the first coater shim 310 and the second coater shim 320 have the same height, and do not vertically overlap each other. Thus, the first coater shim 310 and the second coater shim 320 lie on the same plane between the upper block 100 and the lower block 200. Thus, by a pressing force applied by fastening the upper block 100 to the lower block 200, for example, by bolt fastening (not shown), upper and lower surfaces of each of the first coater shim 310 and the second coater shim 320 are sealed by being in close contact with the upper block 100 and the lower block 200, respectively.

Here, the present invention is configured such that the second coater shim 320 is additionally pressed by a fixing bolt 400 screw-coupled to the insulating liquid inlet 110. As shown in FIG. 1, since a size (area) of the second coater shim 320 is significantly smaller than that of the first coater shim 310, a pressing force resulting from a fastening pressure between the upper block 100 and the lower block 200 is exerted with less intensity. Accordingly, there is a risk that the insulating liquid flowing in the second coater shim 320 may leak out and be mixed with the electrode slurry inside the die coater 10.

In order to prevent the insulating liquid from being mixed inside the die coater 10, the present invention is configured such that the second coater shim 320 tightly contacts the lower block by the fixing bolt 400 screw-coupled to the insulating liquid inlet 110 in order to prevent the internal mixing of the insulating liquid in the die coater 10. As a fastening force for the second coater shim 320 is enhanced by the additional pressing force by the fixing bolt 400, the risk of leakage of the insulating liquid is significantly reduced

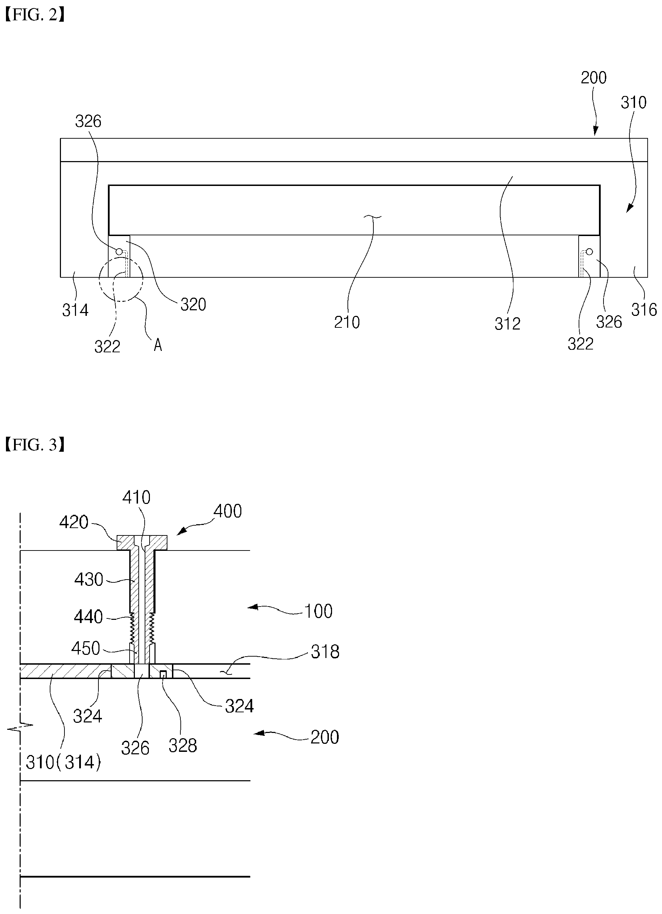

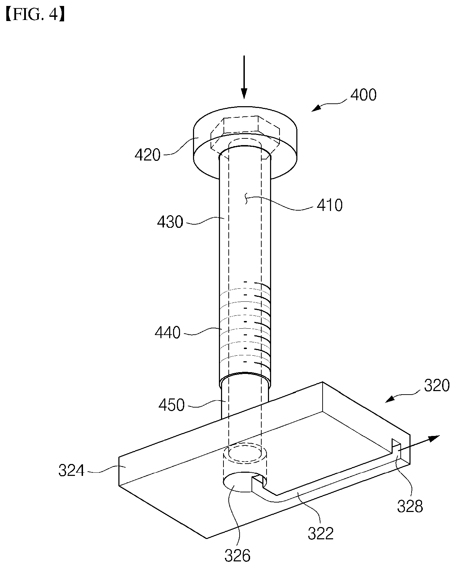

FIG. 2 is a plan view of the die coater 10 as seen through the upper block 100, and FIG. 3 is an enlarged front view of portion "A" of FIG. 2. Referring to FIGS. 1 to 3, the first coater shim 310 includes a base 312 extending in a width direction, and a first guide 314 and a second guide 316 protruding from both ends of the base 312, respectively. Further, the second coater shim 320 includes a flow path groove 322 that is open toward the lower block 200 and provided in the form of a concave groove having a bottom surface (see FIG. 4).

Here, in the first coater shim 310, a space between the first and second guides 314 and 316 is formed as the first slit 318, and in the second coater shim 320, an open end of the flow path groove 322 in the form of a groove is formed as the second slit 328. Since a depth of the flow path groove 322 is smaller than a thickness (height) of the second coater shim 320, as a result, as shown in FIG. 3, a height of the first slit 318 corresponds to a height of the first coater shim 310, and a height of the second slit 328 is formed less than the height of the second coater shim 320. In addition, in the second coater shim 320, since the flow path groove 322 faces the lower block 200, the second slit 328 is defined as a space formed between the flow path groove 322 and the lower block 200.

Since the first coater shim 310 and the second coater shim 320 have the same height and are placed on the same plane without vertically overlapping, the width of the first slit 318 is limited by the width of the second coater shim 320.

For example, in the first embodiment illustrated in FIG. 2, one sidewall 324 of each of a pair of second coater shims 320 is in close contact with an inner sidewall of each of the first guide 314 and the second guide 316. Accordingly, a distance between the facing sidewall 324 (between opposite side surfaces of the closely attached sidewalls) of the paired second coater shims 320 corresponds to a substantial width of the first slit 318. That is, a length obtained by subtracting the widths of the paired second coater shims 320 from the distance between the inner sidewalls of the first guide 314 and the second guide 316 becomes the width of the first slit 318.

As described above, looking at the structure of the second slit 328 formed by the second coater shim 320, since the second slit 328 is isolated from the electrode slurry in the first slit 318 by both sidewalls 324 of the second coater shim 320, and the flow path groove 322 has an upper side that is the bottom surface and a lower side in close contact with the lower block 200, as a result, the second coater shim 320 is structurally completely isolated from the electrode slurry. Furthermore, since the fastening force for the second coater shim 320 is enhanced by the fixing bolt 400 screw-coupled to the insulating liquid inlet 110, in the die coater 10 according to the present invention, the possibility of mixing two different types of liquids is significantly reduced.

In the first embodiment of the present invention, the fixing bolt 400 includes a hollow part 410 that passes therethrough in a longitudinal direction, and an insulating liquid supplied from the outside is supplied to the second slit 328 through the hollow part 410 of the fixing bolt 400. Unlike the flow path groove 322 having the bottom surface, an insulating liquid supply hole 326 is formed in the second slit 328 to pass through the second coater shim 320, and the fixing bolt 400 presses the second coater shim 320 at a position at which the internal hollow part 410 is aligned with the insulating liquid supply hole 326. That is, a central axis of the insulating liquid inlet 110 formed in the upper block 100 is concentric with the insulating liquid supply hole 326 of the second coater shim 320, and an end portion of the fixing bolt 400 presses the periphery of the insulating liquid supply hole 326 to bring the second coater shim 320 into close contact with the lower block.

In addition, the insulating liquid supply hole 326 is disposed in a closed end of the flow path groove 322, and thus, the insulating liquid supply hole 326 communicates with the flow path groove 322. Accordingly, the insulating liquid supplied to the hollow part 410 of the fixing bolt 400 flows to the flow path groove 322 of the bottom surface of the second coater shim 320 facing the lower block through the insulating liquid supply hole 326 and then is discharged to the outside through the open end of the flow path groove 322 forming the second slit 328.

FIG. 4 is a view illustrating a coupling structure of the second coater shim 320 and the fixing bolt 400, and illustrates the configuration of the fixing bolt 400 and the insulating liquid supply hole 326 and the flow path groove 322 of the second coater shim 320 in detail.

The fixing bolt 400 includes a head part 420 coupled to a fastening mechanism (e.g., a wrench or the like), and a support part 430, a male screw part 440, and a pressing part 450 are continuously formed below the head part 420. The support part 430 has an outer diameter corresponding to a diameter of the insulating liquid inlet 110 and supports the fixing bolt 400 so that the fixing bolt 400 does not shake in the insulating liquid inlet 110.

The male screw part 440 is screw-coupled to a female screw part 112 formed on the insulating liquid inlet 110, and the fixing bolt 400 presses the second coater shim 320 while being moved forward by the screw-coupling of the male screw part 440. The male screw part 440 preferably has a thread diameter corresponding to the outer diameter of the support part 430 to secure maximum airtightness without interfering with insertion into the insulating liquid inlet 110.

In addition, the pressing part 450 is a part forming the end portion of the fixing bolt 400, and is in direct contact with the second coater shim 320. An outer diameter of the pressing part 450 needs to be larger than a diameter of the insulating liquid supply hole 326 of the second coater shim 320 so that a sufficient pressing force can be exerted, and needs to be designed to correspond to a minor diameter of the female screw part 112 formed on the insulating liquid inlet 110 so that pressing part 450 can be freely inserted without being caught in a female screw thread of the insulating liquid inlet 110.

As such, in the die coater 10 of the present invention, the second slit 328 of the second coater shim 320 is firmly pressure-sealed to the lower block 200 by the fastening force of the male screw part 440 of the fixing bolt 400 to the female screw part 112 formed on the insulating liquid inlet 110, thereby preventing mixing between the electrode slurry and the insulating liquid.

### [Second embodiment]

A second embodiment of the present invention is an embodiment suitable for a case in which a slitting process is performed after applying an electrode slurry and an insulating liquid on a current collector, which is supplied in the form of a coil, in two or more rows. That is, the second embodiment corresponds to an embodiment suitable for simultaneously applying a mixture layer composed of a structure of "insulating liquid-electrode slurry-insulating liquid" on the current collector in two or more rows.

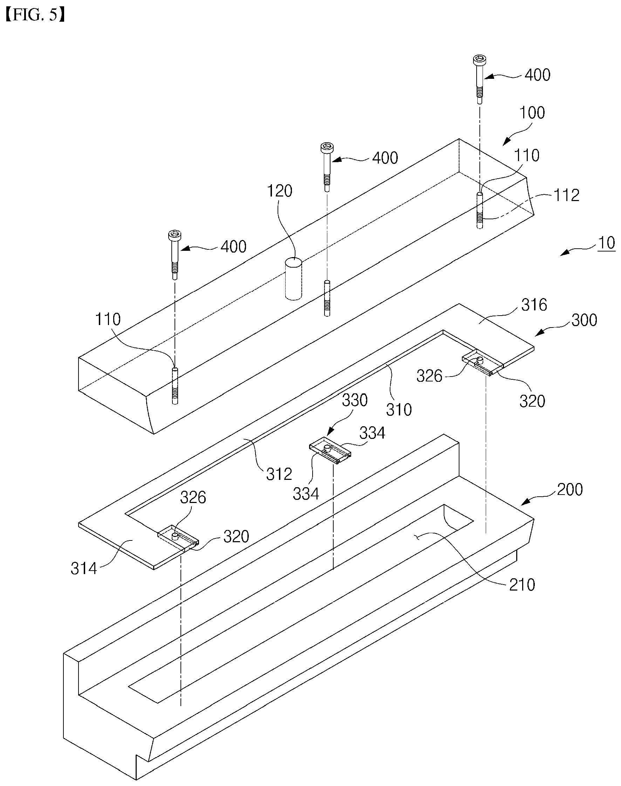

FIG. 5 is an exploded perspective view illustrating a die coater 10 according to a second embodiment of the present invention, and the illustrated second embodiment further includes a third coater shim 330, while including the structure of the first embodiment described above as it is. The third coater shim 330 is installed in the middle of the die coater 10 in a width direction, and discharges an insulating liquid in two streams through a U-shaped flow path groove 322. That is, the third coater shim 330 is configured to discharge the insulating liquid in two streams so as to correspond to the insulating liquid discharged from each of both second coater shims 320 disposed to be brought into close contact with first and second guides 314 and 316.

In addition, the third coater shim 330 is spaced apart from the first and second coater shims 310 and 320 and disposed between the first and second guides 314 and 316, and the third coater shim 330 also acts as a factor to limit the width of a first slit 318, similar to the above-described second coater shim 320 that limits the substantial width of the first slit 318. Thus, the third coater shim 330 disposed in the middle of the first slit 318 causes sidewalls 334 on both sides thereof to split the electrode slurry into two streams, thereby discharging the electrode slurry in two parallel rows. A height of the third coater shim 330 corresponds to a height of each of the first and second coater shims 310 and 320.

By the arrangement of the third coater shim 330 and the two-row discharge structure of the electrode slurry, the application structure of "insulating liquid-electrode slurry-insulating liquid" is formed on the current collector in two parallel rows in the longitudinal direction of the current collector, and two current collector rolls may be obtained at a time by performing a slitting process in the middle of the parallel two rows.

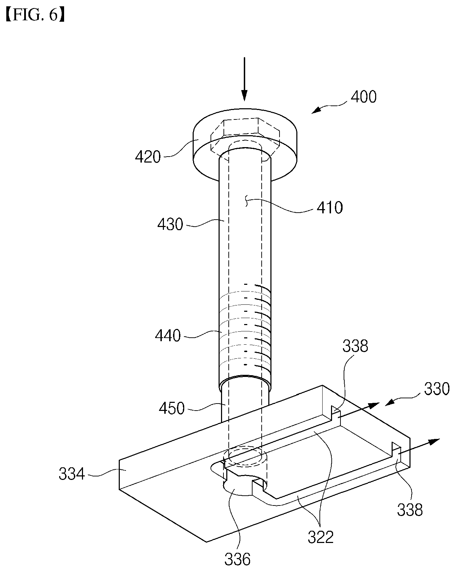

FIG. 6 is a view illustrating a coupling structure of the third coater shim 330 and a fixing bolt 400, and has the same configuration as the second coater shim 320 except that a flow path groove 322 has a U-shaped structure. Specifically, the third coater shim 330 includes a concave U-shaped flow path groove 322 open toward the lower block 200 and having a bottom surface. An insulating liquid supply hole 336 is disposed in a closed end of the U-shaped flow path groove 322, and two open ends of the U-shaped flow path groove 322 form third slits 338. In the same manner as described in the first embodiment, the fixing bolt 400 for supplying the insulating liquid to the third coater shim 330 is provided, and a hollow part 410 formed by passing through the fixing bolt 400 presses the third coater shim 330 at a position aligned with the insulating liquid supply hole 336 of the third coater shim 330.

Here, while the second embodiment is described as simultaneously applying an electrode slurry and an insulating liquid in two rows in parallel to an electrode body by adding one third coater shim 330, it would be obvious to a person skilled in the art that application may be performed in three or more rows by adding two or more third coater shims 330.

### [Description of Reference Numerals]

10: die coater, 100: upper block
110: insulating liquid inlet, 112: female screw part
120: electrode slurry inlet, 200: lower block
210: manifold, 300: coater shim
310: first coater shim, 312: base
314: first guide, 316: second guide
318: first slit, 320: second coater shim
322: flow path groove, 324: sidewall
326: insulating liquid supply hole, 328: second slit
330: third coater shim, 332: U-shaped flow path groove
334: sidewall, 336: insulating liquid supply hole
338: third slit, 400: fixing bolt
410: hollow part, 420: head part
430: support part, 440: male screw part
450: pressing part

### [Industrial Availability]

The present invention relates to a die coater useful for manufacturing a current collector for a secondary battery.

## Claims

1. A die coater (10) comprising:
a lower block (200) including a manifold (210) configured to accommodate an electrode slurry;
an upper block (100) coupled to the lower block (200) and including an insulating liquid inlet (110); and
a coater shim interposed between the upper block (100) and the lower block (200),
**characterized in that** the coater shim includes a first coater shim (310) and a second coater shim (320), the first coater shim (310) having a first slit (318) configured to discharge the electrode slurry accommodated in the manifold (210) and the second coater shim (320) having a second slit (328) configured to discharge an insulating liquid supplied through the insulating liquid inlet (110),
and **in that** the second coater shim (320) is pressed by a fixing bolt (400) that is screw-coupled to the insulating liquid inlet (110).

2. The die coater of claim 1, wherein a width of the first slit (318) is limited by a width of the second coater shim (320).

3. The die coater of claim 2, wherein a height of the first slit (318) corresponds to a height of the first coater shim (310), and
wherein a height of the second slit (328) is less than a height of the second coater shim (320).

4. The die coater of claim 1, wherein the fixing bolt (400) defines a hollow part (410) passing through the fixing bolt (400) in a longitudinal direction, and
wherein the hollow part (410) is configured to receive the insulating liquid to be supplied to the second slit (328).

5. The die coater of claim 4, wherein the second slit (328) is a groove recessed in the second coater shim (320) and disposed to face the lower block (200).

6. The die coater of claim 5, wherein the second coater shim (320) defines an insulating liquid supply hole (326, 336) passing therethrough and in communication with the second slit (328), and
wherein the fixing bolt (400) presses the second coater shim (320) at a position at which the hollow part (410) is aligned with the insulating liquid supply hole (326, 336).

7. The die coater of claim 6, wherein the second coater shim (320) includes a concave flow path groove (322) facing the lower block (200) and having a bottom surface,
wherein the insulating liquid supply hole (326, 336) is disposed in a closed end of the concave flow path groove (322), and
wherein the second slit (328) is an open end of the flow path groove (322).

8. The die coater of claim 7, wherein the first coater shim (310) includes a base (312) extending along a width direction, and first and second guides (314, 316) protruding and extending from both ends of the base (312), respectively, in a direction transverse to the width direction, and
wherein an exterior side wall of each of a pair of second coater shims (320) contacts an inner sidewall of each of the first and second guides (314, 316), respectively.

9. The die coater of claim 8, wherein a distance between an inner side wall of each of the pair of second coater shims (320) correspond to a width of the first slit (318).

10. The die coater of claim 6, wherein the fixing bolt (400) includes:
a head part (420) configured to be coupled to a fastening mechanism;
a support part (430) connected to the head part (420) and having an outer diameter corresponding to a diameter of the insulating liquid inlet (110);
a male screw (440) part configured to be screw-coupled to a female screw part (112) recessed in the insulating liquid inlet (110) and having a thread diameter corresponding to the outer diameter of the support part (430); and
a pressing part (450) having an outer diameter corresponding to an inner diameter of the female screw part (112) recessed in the insulating liquid inlet (110).

11. The die coater of claim 10, wherein the second slit (328) of the second coater shim (320) is configured to be pressure-sealed to the lower block (200) by a fastening force of the male screw part (440) to the female screw part (112), so as to prevent a mixing between the electrode slurry and the insulating liquid.

12. The die coater of claim 8, further comprising a third coater shim (330) including a concave U-shaped flow path groove (332) that is facing the lower block (200) and having a bottom surface, wherein the insulating liquid supply hole (326, 336) is coupled to a closed end of the U-shaped flow path groove (332), wherein the third slit (338) has two open ends of the U-shaped flow path groove (330), and wherein a height of the third coater shim (330) is equal to a height of each of the first and second coater shims (310, 320),
wherein the third coater shim (330) is spaced apart from the first and second coater shims (310, 320) and disposed between the first and second guides (314, 316), and
the fixing bolt (400) presses the third coater shim (330) at a position at which the hollow part (410) is aligned with the insulating liquid supply hole (326, 336) of the third coater shim (330).

13. The die coater of claim 12, wherein the first slit (318), disposed between each of the pair of second coater shims (320), is divided into two parts by the third coater shim (330).

## Patentansprüche

1. Düsenbeschichter (10), umfassend:
einen unteren Block (200), welcher eine Sammelleitung (210) umfasst, welche dazu eingerichtet ist, eine Elektrodenpaste aufzunehmen;
einen oberen Block (100), welcher mit dem unteren Block (200) gekoppelt ist und einen Isolationsflüssigkeit-Einlass (110) umfasst; und
ein Beschichter-Abstandselement, welches zwischen dem oberen Block (100) und dem unteren Block (200) eingefügt ist,
**dadurch gekennzeichnet, dass** das Beschichter-Abstandselement ein erstes Beschichter-Abstandselement (310) und ein zweites Beschichter-Abstandselement (320) umfasst, wobei das erste Beschichter-Abstandselement (310) einen ersten Schlitz (318) aufweist, welcher dazu eingerichtet ist, die in der Sammelleitung (210) aufgenommene Elektrodenpaste abzugeben, und wobei das zweite Beschichter-Abstandselement (320) einen zweiten Schlitz (328) aufweist, welcher dazu eingerichtet ist, eine Isolationsflüssigkeit abzugeben, welche durch den Isolationsflüssigkeit-Einlass (110) zugeführt wird,
und dadurch, dass das zweite Beschichter-Abstandselement (320) durch einen Fixierungsbolzen (400) gepresst ist, welcher mit dem Isolationsflüssigkeit-Einlass (110) schraubengekoppelt ist.

2. Düsenbeschichter nach Anspruch 1, wobei eine Breite des ersten Schlitzes (318) durch eine Breite des zweiten Beschichter-Abstandselements (320) begrenzt ist.

3. Düsenbeschichter nach Anspruch 2, wobei eine Höhe des ersten Schlitzes (318) einer Höhe des ersten Beschichter-Abstandselements (310) entspricht, und
wobei eine Höhe des zweiten Schlitzes (328) geringer als eine Höhe des zweiten Beschichter-Abstandselements (320) ist.

4. Düsenbeschichter nach Anspruch 1, wobei der Fixierungsbolzen (400) einen hohlen Teil (410) definiert, welcher durch den Fixierungsbolzen (400) in einer longitudinalen Richtung verläuft, und
wobei der hohle Teil (410) dazu eingerichtet ist, die Isolationsflüssigkeit aufzunehmen, welche zu dem zweiten Schlitz (328) zuzuführen ist.

5. Düsenbeschichter nach Anspruch 4, wobei der zweite Schlitz (328) eine Nut ist, welche in dem zweiten Beschichter-Abstandselement (320) vertieft ist und dazu angeordnet ist, zu dem unteren Block (200) zu weisen.

6. Düsenbeschichter nach Anspruch 5, wobei das zweite Beschichter-Abstandselement (320) ein Isolationsflüssigkeit-Zufuhrloch (326, 336) definiert, welches dahindurch verläuft und in Kommunikation mit dem zweiten Schlitz (328) steht, und
wobei der Fixierungsbolzen (400) das zweite Beschichter-Abstandselement (320) bei einer Position presst, an welcher der hohle Teil (410) mit dem Isolationsflüssigkeit-Zufuhrloch (326, 336) ausgerichtet ist.

7. Düsenbeschichter nach Anspruch 6, wobei das zweite Beschichter-Abstandselement (320) eine konkave Strömungspfad-Nut (322) umfasst, welche zu dem unteren Block (200) weist und eine untere Fläche aufweist,
wobei das Isolationsflüssigkeit-Zufuhrloch (326, 336) in einem geschlossenen Ende der konkaven Strömungspfad-Nut (322) angeordnet ist, und
wobei der zweite Schlitz (328) ein offenes Ende der Strömungspfad-Nut (322) ist.

8. Düsenbeschichter nach Anspruch 7, wobei das erste Beschichter-Abstandselement (310) eine Basis (312) umfasst, welche sich entlang einer Breitenrichtung erstreckt, sowie erste und zweite Führungen (314, 316), welche jeweils von beiden Enden der Basis (312) vorstehen und sich in eine Richtung transversal zu der Breitenrichtung erstrecken, und
wobei eine äußere Seitenwand von jedem aus einem Paar von zweiten Beschichter-Abstandselementen (320) jeweils eine innere Seitenwand von jeder aus den ersten und zweiten Führungen (314, 316) kontaktiert.

9. Düsenbeschichter nach Anspruch 8, wobei eine Distanz zwischen einer inneren Seitenwand von jedem aus dem Paar von zweiten Beschichter-Abstandselementen (320) einer Breite des ersten Schlitzes (318) entspricht.

10. Düsenbeschichter nach Anspruch 6, wobei der Fixierungsbolzen (400) umfasst:
einen Kopfteil (420), welcher dazu eingerichtet ist, mit einem Befestigungsmechanismus gekoppelt zu sein;
einen Trageteil (430), welcher mit dem Kopfteil (420) verbunden ist und einen Außendurchmesser aufweist, welcher einem Durchmesser des Isolationsflüssigkeit-Einlasses (110) entspricht;
einen männlichen Schraubenteil (440), welcher dazu eingerichtet ist, mit einem weiblichen Schraubenteil (112) schraubengekoppelt zu sein, welcher in dem Isolationsflüssigkeit-Einlass (110) vertieft ist und einen Gewindedurchmesser aufweist, welcher dem Außendurchmesser des Trageteils (430) entspricht; und einen Pressteil (450), welcher einen Außendurchmesser aufweist, welcher einem Innendurchmesser des weiblichen Schraubenteils (112) entspricht, welcher in dem Isolationsflüssigkeit-Einlass (110) vertieft ist.

11. Düsenbeschichter nach Anspruch 10, wobei der zweite Schlitz (328) des zweiten Beschichter-Abstandselements (320) dazu eingerichtet ist, auf den unteren Block (200) durch eine Befestigungskraft des männlichen Schraubenteils (440) auf den weiblichen Schraubenteil (112) druckabgedichtet zu sein, um so ein Mischen zwischen der Elektrodenpaste und der Isolierungsflüssigkeit zu verhindern.

12. Düsenbeschichter nach Anspruch 8, ferner umfassend ein drittes Beschichter-Abstandselement (330), welches eine konkav U-förmige Strömungspfad-Nut (332) umfasst, welche zu dem unteren Block (200) weist und eine untere Fläche aufweist, wobei das Isolationsflüssigkeit-Zufuhrloch (326, 336) mit einem geschlossenen Ende der U-förmigen Strömungspfad-Nut (332) gekoppelt ist, wobei der dritte Schlitz (338) zwei offene Enden der U-förmigen Strömungspfad-Nut (330) aufweist, und wobei eine Höhe des dritten Beschichter-Abstandselements (330) gleich einer Höhe von jedem aus den ersten und zweiten Beschichter-Abstandselementen (310, 320) ist,
wobei das dritte Beschichter-Abstandselement (330) von den ersten und zweiten Beschichter-Abstandselementen (310, 320) beabstandet ist und zwischen den ersten und zweiten Führungen (314, 316) angeordnet ist, und
der Fixierungsbolzen (400) das dritte Beschichter-Abstandselement (330) bei einer Position presst, an welcher der hohle Teil (410) mit dem Isolationsflüssigkeit-Zufuhrloch (326, 336) des dritten Beschichter-Abstandselements (330) ausgerichtet ist.

13. Düsenbeschichter nach Anspruch 12, wobei der erste Schlitz (318), welcher zwischen jedem aus dem Paar von zweiten Beschichter-Abstandselementen (320) angeordnet ist, in zwei Teile durch das dritte Beschichter-Abstandselement (330) unterteilt ist.

## Revendications

1. Métier à filière pour l'enduction par fusion (10) comprenant :
un bloc inférieur (200) incluant un collecteur (210) configuré pour loger une barbotine d'électrode ;
un bloc supérieur (100) couplé au bloc inférieur (200) et incluant une entrée de liquide isolant (110) ; et
une cale d'enduction interposée entre le bloc supérieur (100) et le bloc inférieur (200),
**caractérisé en ce que** la cale d'enduction inclut une première cale d'enduction (310) et une deuxième cale d'enduction (320), la première cale d'enduction (310) ayant une première fente (318) configurée pour décharger la barbotine d'électrode logée dans le collecteur (210) et la deuxième cale d'enduction (320) ayant une deuxième fente (328) configurée pour décharger un liquide isolant fourni via l'entrée de liquide isolant (110),
**et en ce que** la deuxième cale d'enduction (320) est pressée par un boulon de fixation (400) qui est couplé par vis à l'entrée de liquide isolant (110).

2. Métier à filière pour l' enduction par fusion selon la revendication 1, dans lequel une largeur de la première fente (318) est limitée par une largeur de la deuxième cale d'enduction (320).

3. Métier à filière pour l' enduction par fusion selon la revendication 2, dans lequel une hauteur de la première fente (318) correspond à une hauteur de la première cale d'enduction (310), et
dans lequel une hauteur de la deuxième fente (328) est inférieure à une hauteur de la deuxième cale d'enduction (320).

4. Métier à filière pour l' enduction par fusion selon la revendication 1, dans lequel le boulon de fixation (400) définit une partie creuse (410) passant à travers le boulon de fixation (400) dans une direction longitudinale, et
dans lequel la partie creuse (410) est configurée pour recevoir le liquide isolant à fournir à la deuxième fente (328).

5. Métier à filière pour l' enduction par fusion selon la revendication 4, dans lequel la deuxième fente (328) est une rainure en retrait dans la deuxième cale d'enduction (320) et disposée pour faire face au bloc inférieur (200).

6. Métier à filière pour l' enduction par fusion selon la revendication 5, dans lequel la deuxième cale d'enduction (320) définit un orifice d'alimentation en liquide isolant (326, 336) traversant celle-ci et en communication avec la deuxième fente (328), et
dans lequel le boulon de fixation (400) presse la deuxième cale d'enduction (320) à une position à laquelle la partie creuse (410) est alignée avec l'orifice d'alimentation en liquide isolant (326, 336).

7. Métier à filière pour l' enduction par fusion selon la revendication 6, dans lequel la deuxième cale d'enduction (320) inclut une rainure de trajet d'écoulement (322) concave faisant face au bloc inférieur (200) et ayant une surface basse,
dans lequel l'orifice d'alimentation en liquide isolant (326, 336) est disposé dans une extrémité fermée de la rainure de trajet d'écoulement (322) concave, et
dans lequel la deuxième fente (328) est une extrémité ouverte de la rainure de trajet d'écoulement (322).

8. Métier à filière pour l' enduction par fusion selon la revendication 7, dans lequel la première cale d'enduction (310) inclut une base (312) s'étendant suivant une direction de largeur, et des premier et deuxième guides (314, 316) faisant saillie et s'étendant à partir des deux extrémités de la base (312), respectivement, dans une direction transversale à la direction de largeur, et
dans lequel une paroi latérale extérieure de chacune d'une paire de deuxièmes cales d'enduction (320) entre en contact avec une paroi latérale interne de chacun des premier et deuxième guides (314, 316), respectivement.

9. Métier à filière pour l'enduction par fusion selon la revendication 8, dans lequel une distance entre une paroi latérale interne de chacune de la paire de deuxièmes cales d'enduction (320) correspond à une largeur de la première fente (318).

10. Métier à filière pour l' enduction par fusion selon la revendication 6, dans lequel le boulon de fixation (400) inclut :
une partie tête (420) configurée pour être couplée à un mécanisme d'attache ;
une partie de support (430) reliée à la partie tête (420) et ayant un diamètre externe correspondant à un diamètre de l'entrée de liquide isolant (110) ;
une partie vis mâle (440) configurée pour être couplée par vis à une partie vis femelle (112) en retrait dans l'entrée de liquide isolant (110) et ayant un diamètre de filetage correspondant au diamètre externe de la partie de support (430) ; et
une partie de pression (450) ayant un diamètre externe correspondant à un diamètre interne de la partie vis femelle (112) en retrait dans l'entrée de liquide isolant (110).

11. Métier à filière pour l'enduction par fusion selon la revendication 10, dans lequel la deuxième fente (328) de la deuxième cale d'enduction (320) est configurée pour être scellée sous pression au bloc inférieur (200) par une force d'attache de la partie vis mâle (440) à la partie vis femelle (112), de façon à empêcher un mélange entre la barbotine d'électrode et le liquide isolant.

12. Métier à filière pour l'enduction par fusion selon la revendication 8, comprenant en outre une troisième cale d'enduction (330) incluant une rainure de trajet d'écoulement en forme de U (332) concave qui fait face au bloc inférieur (200) et ayant une surface basse, dans lequel l'orifice d'alimentation en liquide isolant (326, 336) est couplé à une extrémité fermée de la rainure de trajet d'écoulement en forme de U (332), dans lequel la troisième fente (338) comporte deux extrémités ouvertes de la rainure de trajet d'écoulement en forme de U (332), et dans lequel une hauteur de la troisième cale d'enduction (330) est égale à une hauteur de chacune des première et deuxième cales d'enduction (310, 320),
dans lequel la troisième cale d'enduction (330) est espacée des première et deuxième cales d'enduction (310, 320) et disposée entre les premier et deuxième guides (314, 316), et
le boulon de fixation (400) presse la troisième cale d'enduction (330) à une position à laquelle la partie creuse (410) est alignée avec l'orifice d'alimentation en liquide isolant (326, 336) de la troisième cale d'enduction (330).

13. Métier à filière pour l'enduction par fusion selon la revendication 12, dans lequel la première fente (318), disposée entre chacune de la paire de deuxièmes cales d'enduction (320), est divisée en deux parties par la troisième cale d'enduction (330).
